# EUROPEAN PATENT APPLICATION

(11) **EP 4 790 982 A1**
(43) Date of publication of application: **12.08.2026**
(21) Application number: 26152577.8
(22) Date of filing: 19.01.2026
(51) Int. Cl.: H04N 7/18, H04N 23/65

(54) **HIGH PRECISION TIMING FOR DEVICES WITH SLEEP MODE IN AN ELECTRONIC MONITORING SYSTEM**

(30) Priority: 07.02.2025 US 202519048215
(71) Applicant: Arlo Technologies, Inc., Carlsbad, CA 92008 (US)
(72) Inventor: Qian, Nanjian, San Diego, CA 92130 (US); Van Cleave, Todd, San Marcos, CA 92078 (US); Yaushev, Rustem, Carlsbad, CA 92008 (US); Wang, Lei, Carlsbad, CA 92008 (US)
(74) Representative: Grünecker Patent- und Rechtsanwälte PartG mbB

(57) **Abstract**

An electronic monitoring system with a sleep mode includes an access point having a first clock circuit and at least one monitoring device. The monitoring device obtains images of a monitored area and generates a trigger signal corresponding to a detected event. The monitoring device includes a second clock circuit and first and second control architectures. The first control architecture obtains the images of the monitored area and to enters an idle state. The second control architecture receives the trigger signal and wakes the first control architecture from the idle state. Upon waking from the idle state, the control architectures determine a present time for the first control architecture as a function of stored times for the first and second control architectures and of the present time in the second control architecture. A method of providing a high precision time stamp upon waking from the sleep mode also is disclosed.

## Description

### BACKGROUND OF THE INVENTION

### FIELD OF THE PRESENT DISCLOSURE

This invention relates generally to an system and method for providing a high precision timing source for devices with sleep mode in an electronic monitoring systems and, in particular, to an electronic monitoring system including a device with a dual control architecture, where a first control architecture enters a sleep mode and a second control architecture maintains high precision timing. The invention additionally relates to a method performed by such a system.

### TECHNICAL BACKGROUND

Wi-Fi^{™} enabled video cameras are in wide use and are often used for monitoring and security purposes. Content captured by wireless enabled cameras can be communicated over the Internet. The content can be viewed in substantially real time and/or recorded for later viewing.

Some video cameras are Wi-Fi^{™} enabled and battery powered. An example of such a camera is disclosed in US Patent No. 9,713,084, assigned to Netgear, Inc., the content of which is incorporated herein by reference. A wireless-enabled, battery-powered camera may have a divided control architecture to help conserve battery life. A first control architecture may have a first functionality including, for example, control of the video monitoring, recording, and/or processing occurring on the camera. The processing performed by the first control architecture consumes a majority of the power within the camera. A second control architecture may have a second functionality including, for example, communications with an access point and power management within the camera. The processing performed by the second control architecture consumes a minority of the power within the camera.

The camera may utilize one or more sleep modes to help conserve battery life for the wireless camera. For example, the first control architecture may have a first sleep mode with longer durations which is controlled by the second control architecture. The second control architecture may have a short sleep mode, which is periodically interrupted for maintenance communication and/or in response to events detected within the camera. If an event is detected by the second control architecture which requires video capture by the first control architecture, the second control architecture wakes the first control architecture to begin video capture.

In some applications, it is necessary to have precise knowledge of the time at which video capture begins. However, obtaining precise knowledge of the time is not without certain challenges. Monitoring and security systems often have numerous cameras spaced about an area to be monitored. It is desirable to keep the cost of each camera low to reduce the cost of the overall system. Consequently, low precision oscillators are commonly included within the camera. These low precision oscillators may drift up to about 90 seconds per day from an originally set time. As a result, a timestamp applied to the beginning of video capture may not be precise.

Historically, it is known that one solution to the drift is to provide high precision oscillators. A high precision oscillator may reduce the drift to about one second per day. However, the improved precision results in increased cost for each unit in which the high precision oscillator is installed.

Alternately, the camera may generate a request to resynchronize its time with a network host upon wakeup. However, cameras are typically located at remote locations around the area being monitored and are connected to the host via a wireless connection. Transmission delays occur between the camera and the host for both requesting that the time be resynchronized and in receiving an updated time from the host. The time delay experienced by the camera to resynchronize with the host generates unacceptable delays in beginning to record video after the event occurs which caused the camera to exit sleep mode.

Thus, a need exists for an improved system and method for maintaining a high precision timing source within the camera.

The need additional exists to rapidly begin capturing video with a camera following a triggering event and to utilize the high precision timing source to timestamp a start of the captured video.

### SUMMARY OF THE INVENTION

In accordance with one aspect of the present invention, one or more of these needs is met by providing a method for providing a time stamp in an electronic monitoring system detects an event occurring at a monitoring device. The monitoring device includes a first control architecture and a second control architecture, where the second control architecture receives a signal indicating the event occurred and wakes the first control architecture from an idle state with the second control architecture upon receiving the signal indicating the event occurred. A present time is transmitted from the second control architecture to the first control architecture. A present time for the first control architecture is determined as a function of a stored time in a memory for the first control architecture and of the present time in the second control architecture.

According to an aspect of the invention, the second control architecture is awakened from an idle state upon receipt of the signal indicating the event occurred.

According to another aspect of the invention, a first time register for the first control architecture and a second time register for the second control architecture are each synchronized with an external time source. The first control architecture receives an enter idle state command for the first control architecture to transition from an active state to the idle state. A present value of the first time register is stored as an original time value after receiving the enter idle state command and prior to the first control architecture entering the idle state, and a present value of the second time register is stored as a base time value after receiving the enter idle state command and prior to the first control architecture entering the idle state.

According to yet another aspect of the invention, determining the present time in the first control architecture includes reading the original time value and the base time value which were previously stored prior to the first control architecture entering the idle state, reading a present value of the second time register, and setting the first time register equal to the original time value added to a difference between the present value of the second time register and the base time value. The second control architecture may read the original time value, the base time value, and the present value of the second time register and determine a new time value equal to the original time value added to a difference between the present value of the second time register and the base time value. The new time value is then transmitted from the second control architecture to the first control architecture. Optionally, the second control architecture reads the original time value, the base time value, and the present value of the second time register and transmits these values from the second time register to the first control architecture. The first control architecture may then determine a new time value equal to the original time value added to a difference between the present value of the second time register and the base time value.

According to still another aspect of the invention, a beacon message is received from an access point in the electronic monitoring system. A time register for the second control architecture is synchronized with an external time source on the access point. The second control architecture may be placed in an idle state and at least one beacon message may be ignored while the second control architecture is in the idle state. The second control architecture is awakened at a predefined duration to receive the beacon message for synchronizing the time register.

According to another aspect of the invention, a system for providing a time stamp in an electronic monitoring system, includes an access point having a first clock circuit, and at least one monitoring device in communication with the access point. The monitoring device includes a camera to obtain images of a monitored area, at least one sensor operative to generate a trigger signal corresponding to an event detected by the at least one sensor, a second clock circuit, a first control architecture, and a second control architecture. The first control architecture is configured to control the camera to obtain the images of the monitored area and to enter an idle state. The second control architecture is connected to the at least one sensor to receive the trigger signal, where the second control architecture is operative to wake the first control architecture from the idle state responsive to receiving the trigger signal and to transmit a present time to the first control architecture. The first and second control architectures determine a present time for the first control architecture as a function of a stored time for the first control architecture, a stored time for the second control architecture, and of the present time in the second control architecture.

The access point may be contained in either a base station that is configured to control the electronic monitoring system or a router that is configured to establish wireless communication between the at least one monitoring device and the base station.

These and other features and advantages of the invention will become apparent to those skilled in the art from the following detailed description and the accompanying drawings. It should be understood, however, that the detailed description and specific examples, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Preferred exemplary embodiments of the invention are illustrated in the accompanying drawings in which like reference numerals represent like parts throughout, and in which:
**FIG.** 1 is a block diagram representing a system for capturing, transmitting, and displaying images according to aspects of the invention;
**FIG.** 2 is a block diagram representing a camera shown in FIG. 1;
**FIG.** 3 is a block diagram representing a base station shown in FIG. 1; and
**FIG.** 4 is a timing diagram illustrating steps for setting time registers in the dual control architecture for the camera of FIG. 2.

### DETAILED DESCRIPTION

### Basis of the present disclosure

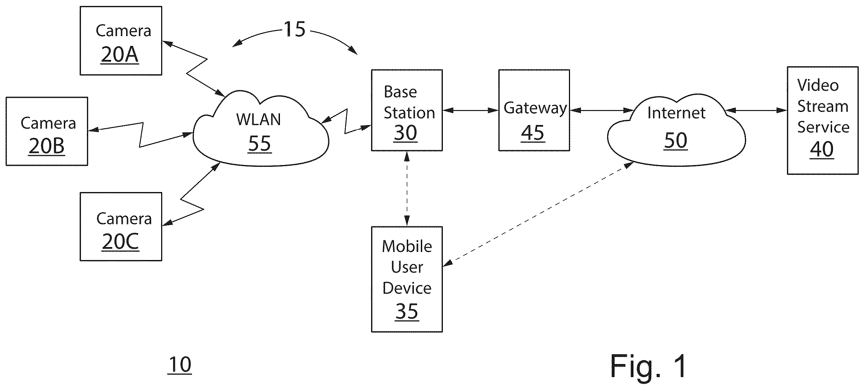

FIG. 1 represents a system 10 for capturing, transmitting, and displaying images, such as images of a video. The video is acquired at a first location and displayed at a second location. The shown system 10 includes a wireless camera network 15 having a plurality of wireless node cameras 20A-C transmitting and receiving wireless signals to and from an access point (AP) via the wireless network 55. The access point is shown as a base station 30. Although three cameras 20A-C are shown in FIG. 1, a system can have any number "n" of cameras. The system 10 also includes a remote electronic device, which is shown as a mobile user device 35, and a video stream service 40. The user device 35 and the video stream service 40 are in communication with the base station 30 via a gateway 45 and the Internet 50. It is contemplated that many different arrangements are possible for the system 10, and the shown system 10 is provided for ease of explanation. For example, the base station 30 may be one component of a larger wired and/or wireless local area network (LAN) having many access points such as wireless routers, range extenders, or other network devices extending communications with the cameras 20A-C.

The cameras 20A-C are in communication with the base station 30. The base station 30 can host a private local area network, which is shown as the wireless local area network (WLAN) 55. The WLAN 55 of one implementation is an IEEE 802.11 local area network (LAN) that follows the network protocols of the Wi-Fi^{™} Alliance. Such a network is typically referred to as a Wi-Fi^{™} network. However, the WLAN 55 can be or include other wireless local area networks.

Electronic devices communicate data to and from the cameras 20A-C. One example electronic device is the mobile user device 35. Exemplary mobile user devices can be a smart phone, tablet computer, or a laptop computer, etc. The electronic device can alternatively be a stationary user device. A stationary user device, such as a desktop computer, is an electronic device that is generally considered by one skilled in the art as stationary even though the device can move.

Another electronic device that communicates data to and from the camera is the video stream service 40. The video stream service 40 can be a commercially available service for storing and/or analyzing the images and/or video. Exemplary analyzing services include enabling the camera to differentiate between humans and animals, reducing false motion notifications, sending alerts and screenshots to the user device 35, etc. The video stream service 40 can also provide a secure gateway for video to be communicated from the cameras 20A-C to the user device 35. An exemplary video stream service 40 is Arlo's Smart^{™} video stream service available from Arlo Technologies, Inc. in San Jose, California, U.S.

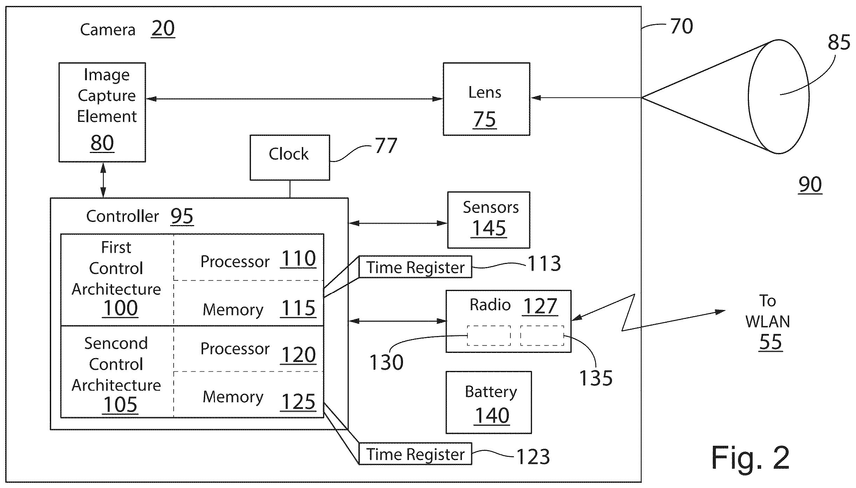

FIG. 2 represents an example of a camera 20 shown in FIG. 1, which is considered to apply to each of the cameras 20A-20n.. In the illustration, the camera 20 has a small and compact housing 70 for enclosing and protecting the various camera components illustrated as blocks in FIG. 2. The camera 20 includes a lens 75 and an image capture element (or primary sensor) 80. The image capture element 80 can be any suitable type of image capturing device or sensor, including, for example, an area array sensor, a Charge Coupled Device (CCD) sensor, a Complementary Metal Oxide Semiconductor (CMOS) sensor, or a linear array sensor, just to name a few possibilities. The image capture element 80 may capture images in suitable wavelengths on the electromagnetic spectrum. The image capture element 80 may capture color images and / or grayscale images.

The camera 20 has a field of view 85 extending radially from the outwardly facing lens 75. The field of view 85 is a portion of the environment 90 within which the camera 20 can detect electromagnetic radiation via the lens 75 and image capture element 80. The camera 20 is configured to capture images. An image is a digital representation of a scene from the environment 90 as captured by the camera 20. Capturing an image refers to the act of obtaining and recording an image data file or stream of the digital representation. The scene is the portion of the environment 90 observed through the field of view 85. Capturing a plurality of images in a timed sequence can result in a video. Capturing a video refers to the act of obtaining and recording a video data file or stream of the digital representation.

Still referring to FIG. 2, the camera 20 has a controller 95 including a first control architecture 100 and a second control architecture 105. The first control architecture 100 includes a first processor 110 and a first memory 115, and the second control architecture 105 includes a second processor 120 and a second memory 125. While the arrangement of FIG. 2 shows the controller having dual processors and memories, it is envisioned that many other arrangements are possible.

The processors 110 and 120 can include any component or group of components that are configured to execute, implement, and/or perform any of the processes or functions described herein or any form of instructions to carry out such processes or cause such processes to be performed. Examples of suitable processors include a microprocessor, microcontroller, and other circuitry that can execute software. Further examples of suitable processors include, but are not limited to, a central processing unit (CPU), an array processor, a vector processor, a digital signal processor (DSP), a field-programmable gate array (FPGA), a programmable logic array (PLA), an application specific integrated circuit (ASIC), programmable logic circuitry, and a controller. The processors 110 and/or 120 can include a hardware circuit (e.g., an integrated circuit) configured to carry out instructions contained in program code.

The memories 115 and 125 store one or more types of instructions and/or data. The memories 115 and 125 can include volatile and/or non-volatile memory. Examples of suitable memory include RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, disks, drives, or any other suitable storage medium, or any combination thereof. The memories 115 and/or 125 can be a component of a processor, can be operatively connected to a processor for use thereby, or a combination of both. According to the illustrated embodiment, the first memory 115 includes a first time register 113, providing a value of the present time for use in the first control architecture 100, and the second memory 125 includes a second time register 123, providing a value of the present time for use in the second control architecture 105.

The memories 115 and 125 can include various instructions stored thereon. For example, the memories 115 and 125 can store one or more modules. Modules can be or include computer-readable instructions that, when executed by a processor, cause a processor to perform the various functions disclosed herein. Example modules in memory 115 include a sleep module for causing the first control architecture to enter and exit an idle state. Example modules in memory 125 include a communication module for communicating with the base station 30, and an interrupt module for initiating a wakeup signal to the first control architecture. The memory 125 in the second control architecture 105 may also include a second sleep module for causing the second control architecture to enter and exit an idle state. While functions may be described herein for purposes of brevity, it is noted that the functions are performed by the first processor 110 or the second processor 120 using the instructions stored on or included in the various modules described herein. Some modules may be stored remotely and accessible by a processor using, for instance, various communication devices and protocols.

In accordance with one construction, the first control architecture 100 includes a separate device from the second control architecture 105 such that the first and second control architectures can enter and exit idle states independently of one another. As used herein, an idle state is broadly defined as stand by, suspend, power off, hibernation, hybrid sleep, sleep, and related modes. In one construction, the first control architecture 100 includes camera host hardware and the second control architecture 105 includes communication system-on-chip (SoC) hardware. The first control architecture 100 (e.g., the camera host hardware) performs image processing functions on image data received from the image capture element 80, and controls handling of messages received from and transmitted to the base station 30. When there are no messages to be received or transmitted and no image processing functions to be performed, the first control architecture 100 can be powered down or placed in a low-power sleep mode. The second control architecture 105 (e.g., the communication system-on-chip hardware) controls operation of the camera 20 when the first control architecture 100 is powered down and powers up the first control architecture 100 upon the occurrence of one or more predetermined triggering events. The first control architecture 100, when awake, is the master controller of the camera 20 and functions as the host processor to the radio (discussed below) and the image capture element 80. Further discussion regarding the relationship between the first control architecture and the second control architecture will be provided below.

The camera 20 also includes a clock circuit 77 which maintains a free-running clock. The value of the free-running clock may be used to generate a present time value. As discussed above, the oscillator in the clock circuit 77 for the camera 20 is a low-precision oscillator, meaning the present time value may drift, for example, up to ninety seconds per day from a master clock signal to which the clock circuit 77 has previously been synchronized. The clock circuit 77, synchronization, and use of the present time value will be discussed in more detail below.

Before moving to other components of the camera 20, it should be understood by somebody skilled in the art that the controller 95 includes many additional conventional elements typically found in a wireless camera controller. Example elements include, but are not limited to, one or more floodlights or any of various sensors and detectors employed by surveillance cameras. Further discussion regarding these components is not provided herein since the components are conventional.

The camera 20 communicates wirelessly (e.g., with the base station 30) via a radio 127. An example of a radio includes a wireless local area network (WLAN) radio. With the WLAN radio 127, the camera 20 generally communicates over a short-range wireless communication network, such as the WLAN 55. In one implementation, the radio 127 includes a transceiver 130 for transmitting and receiving signals to and from the base station 30, via an antenna 135. The transceiver 130 can be separate to or part of the second control architecture 105. The wireless communication can be as prescribed by the IEEE 802.11 standards in accordance with the Wi-Fi^{™} communication protocol. It is appreciated, however, that the camera 20 can be adapted to perform communications in accordance with any known or to be developed communication protocol, or even a proprietary communication protocol developed for a particular application.

The camera 20 is battery-powered by a battery (or battery pack) 140. In one implementation, the life of the battery 140 is extended by having the camera 20 normally operate in an idle state, and only activating the camera, or portions of the camera, for necessary periods of time to perform one or more desired functions. For example, the default mode of operation of the camera 20 is a sleep mode wherein the controller 95 is substantially deactivated. In this mode, the controller 95, or any deactivated portion thereof, are only activated on an "as needed" basis. Further examples of this operation will be described below.

The camera 20 can further include secondary sensors 145, which may also be used to generate an interrupt signal. For example, a secondary sensor 145 may be a microphone which generates an interrupt signal upon receiving an audio signal above a defined threshold. Alternatively, the secondary sensor 145 may be a motion sensor for sensing motion in a room, for example. Such secondary sensors 145 are useful, for example, in security situations to detect if an unauthorized entry into a particular area has occurred. Upon detecting a substantial noise and/or motion, an interrupt signal is generated, which can then activate a portion of the controller 95. Other example secondary sensors 145 include a temperature sensor, an image sensor, and a vibration sensor.

An exemplary camera capable of incorporating aspects of the invention is an Arlo Ultra brand camera available from Arlo Technologies in San Jose, California, US. Before moving to other components of the system 10, it should be understood by somebody skilled in the art that the camera 20 includes many additional conventional components typically found in a wireless camera. Example components include, but are not limited to, floodlights, doorbells, and any of various sensors. Further discussion regarding these components is not provided herein since the components are conventional.

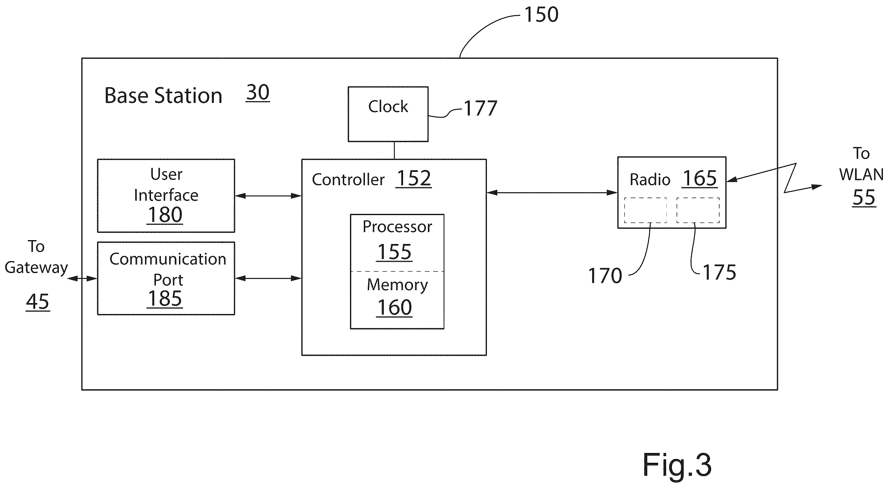

Turning now to FIG. 3, the figure represents an example of the base station 30 shown in FIG. 1. In the illustration, the base station 30 has a housing 150 for enclosing and protecting the various components illustrated as blocks in FIG. 3. The base station 30 has a controller 152, including a processor 155 and a memory 160. While the arrangement of FIG. 3 shows a single processor 155 and a single memory 160, it is envisioned that many other arrangements are possible. For example, multiple elements of the base station 30 can include a distinct processor and memory.

The processor 155 can include a component or group of components that are configured to execute, implement, and/or perform any of the processes or functions described herein for the base station 30 or a form of instructions to carry out such processes or cause such processes to be performed. Examples of suitable processors include a microprocessor, a microcontroller, and other circuitry that can execute software. Further examples of suitable processors include, but are not limited to, a core processor, a central processing unit (CPU), a graphical processing unit (GPU), an array processor, a vector processor, a digital signal processor (DSP), a field-programmable gate array (FPGA), a programmable logic array (PLA), an application specific integrated circuit (ASIC), math co-processors, and programmable logic circuitry. The processor 155 can include a hardware circuit (e.g., an integrated circuit) configured to carry out instructions contained in program code. In arrangements in which there are a plurality of processors, such processors can work independently from each other or one or more processors can work in combination with each other.

The base station 30 includes a memory 160 for storing one or more types of instructions and/or data. The memory 160 can include volatile and/or non-volatile memory. Examples of suitable memory include RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, disks, drives, or any other suitable storage medium, or any combination thereof. The memory 160 can be a component of the processor 155, can be operatively connected to the processor 155 for use thereby, or a combination of both.

In one or more arrangements, the memory 160 can include various instructions stored thereon. For example, the memory 160 can store one or more modules. Modules can be or include computer-readable instructions that, when executed by the processor 155, cause the processor 155 to perform the various functions disclosed for the module. While functions may be described herein for purposes of brevity, it is noted that the functions are performed by the processor 155 using the instructions stored on or included in the various modules. Some modules may be stored remotely and accessible by the processor 155 using, for instance, various communication devices and protocols.

The base station 30 also includes a clock circuit 177 which maintains a free-running clock. The value of the free-running clock may be used to generate a present time value. The base station 30 is typically powered by a utility power supply rather than a battery as the cameras 20 or other remote monitoring equipment. Further, each electronic monitoring system 10 will typically include a single base station 30. As a result, the oscillator in the clock circuit 177 for the base station 30 may be of higher precision than the oscillator in the camera 20 or other remote monitoring device. The increased precision in the oscillator means the present time value generated by the clock circuit may drift only one or two seconds per day. Further, a more frequent resynchronization of the clock circuit 177 with a master clock circuit may keep the accuracy of the present time value in the base station within milliseconds or tens of a millisecond per day. The value of the present time generated by the clock circuit 177 is used to resynchronize the clock circuit 77 in the camera 20 as will be discussed in more detail below.

The base station 30 also could be combined with a gateway router 45 or another device in a single module, which would still be considered a "base station" within the meaning of the present disclosure. Stated another way, the access point formed by the base station could be contained in the gateway router 45 and/or other system component(s).

The base station 30 communicates wirelessly (e.g., with the cameras 20A-C) via a radio 165. An example of a radio includes a wireless local area network (WLAN) radio. With the WLAN radio, the base station 30 generally communicates over a short-range wireless communication network, such as the WLAN 55. In one implementation, the radio 165 includes a transceiver 170 for transmitting and receiving signals to and from the camera 20, via an antenna 175. The transceiver 170 can be separate to or part of the controller 152. The wireless communication can be as prescribed by the IEEE 802.11 standards in accordance with the Wi-Fi^{™} communication protocol. It is appreciated, however, that the base station 30 can be adapted to perform communications in accordance with any known or to be developed communication protocol, or even a proprietary communication protocol developed for a particular application.

The base station 30 includes the user interface 180. The user interface 180 can include an input apparatus and an output apparatus. The input apparatus includes a device, component, system, element, or arrangement or groups thereof that enable information/data to be entered into the base station 30 from a user. The output apparatus includes any device, component, or arrangement or groups thereof that enable information/data to be presented to the user. The input apparatus and the output apparatus can be combined as a single apparatus, such as a touch screen commonly used by many electronic devices.

The base station 30 includes a communication port 185, which is configured to provide a communication interface between a larger computer network, such as the Internet 50 via the gateway 45, for example, and the wireless camera network 15.

In one construction, since the base station 30 is powered by an enduring power source (e.g., power outlet), it is not necessary for the base station 30 to be operated in a default sleep mode, although this is not precluded. An exemplary base station capable of incorporating aspects of the invention is an Arlo SmartHub brand base station available from Arlo Technologies in San Jose, California, US. Before moving to the operation of the system 10, it should be well understood by somebody skilled in the art that the base station 30 includes many additional conventional components typically found in a base station or access point.

For the camera 20 described above, it should be appreciated that conserving the power of the battery 140 and avoiding undue power drainage of the battery 140 is highly desirable. By conserving power and avoiding undue power drainage, the battery 140 requires less frequent recharging and/or replacement, which is not only more convenient but also less expensive for the user.

During operation of the system 10, the base station 30 broadcasts a beacon frame, among other communication. A beacon frame is one of the management frames in IEEE 802.11 based WLANs. A beacon frame contains information about the network and is transmitted periodically. The beacon frame serves to announce the presence of a wireless LAN and to synchronize the members of the service set. Beacon frames are transmitted by the base station 30 in an infrastructure basic service set (BSS).

While beacon frames do cause some non-trivial overhead for a network, they are necessary for the proper operation of a network. When a wireless node (e.g., camera 20) receives a beacon frame, it receives information about the capabilities and configuration of that network. The wireless node may also be able to generate a list of available eligible networks, sorted by signal strength.

After initial power ON, the camera 20 attempts to associate with one or more AP's. For example, the camera 20 can associate with the base station 30. Once associated with the base station 30, the camera 20 may transition to an idle state. In this idle state, the camera 20 is in a low power state where all non-essential components or units are powered down or in sleep mode in order to conserve power. In one embodiment, the first control architecture 100, and more specifically the first processor 110, is placed in an idle state, to be awakened by the second control architecture, and more specifically the second processor 120, upon the occurrence of a predetermined triggering event. In the idle state, information pertaining to the last state of the controller 95 is maintained in the first memory 115, as necessary, so that when the first control architecture is awakened, it may resume operations from its last state before it entered the idle state.

After associating with a network, such as network 55, the second control architecture 105 of the camera 20 continues to scan for beacon frames. This has several benefits. For example, as the camera 20 still receives beacon frames from the currently associated base station 30, the camera 20 is able to use the timestamps in those beacon frames to update its internal clock. Beacon frames from the currently associated base station 30 also inform the camera 20 of imminent configuration changes.

Another benefit of beacon frames is to enable the camera 20 to have power saving modes. For example, the base station 30 holds on to packets destined for the nodes that are currently idled. In a traffic indication map of a beacon frame, the base station 30 is able to inform nodes, such as camera 20, that they have frames waiting for delivery.

In one operation, both the first control architecture 100 and the second control architecture 105 of the camera 20 are in an idle state. The camera, nevertheless periodically listens for beacons from the base station. However, because both control architectures 100, 105 are in an idle state, the camera 20 may skip a predetermined number of beacons, allowing the camera to conserve power. The second control architecture 105 may be configured to wake at a periodic interval that corresponds to the predetermined number of beacons to be skipped and then attempt to capture the next beacon. Contained in the beacon frame is a Traffic Indication Map (TIM) or a Delivery Traffic Indication Map (DTIM), which contains information indicating whether information or a message is waiting to be sent to the camera 20. If the TIM or DTIM indicates that the camera 20 has a message waiting to be sent to the camera 20, this will trigger the second processor 120 to wake the first processor 110, which will then request the message or data from the base station 30. Upon receiving the message, the first processor 110 will process any instructions or data contained in the message and, thereafter, the camera 20 returns to the idle state with the first control architecture 100 and other non-essential units powered down or in a sleep mode. In one construction, the first processor 110, the first memory 115, and image capture element 80 are devices that are powered down when the camera 20 is associated with the base station 30 but in an idle state. In this state, the second processor 120, the second memory 125, and the radio 127 are placed in low-power modes.

The second control architecture 105 is also configured to manage interrupt signals indicating the video capture or other camera functions under control by the first control architecture 100 is required. If an event occurs that requires the attention of the first processor 110 and the first processor 110 is already powered up, then the second processor 120 will simply inform the first processor of the interrupt. If the first processor 110 is in an idle state when the event occurs, the second processor 120 first awakes the first processor and then informs it of the interrupt. When the first processor 110 has completed all of its operations it will again power down and enter an idle state. Before powering down, the first processor 110 saves its current state information, and any other desired information, in the first memory 115.

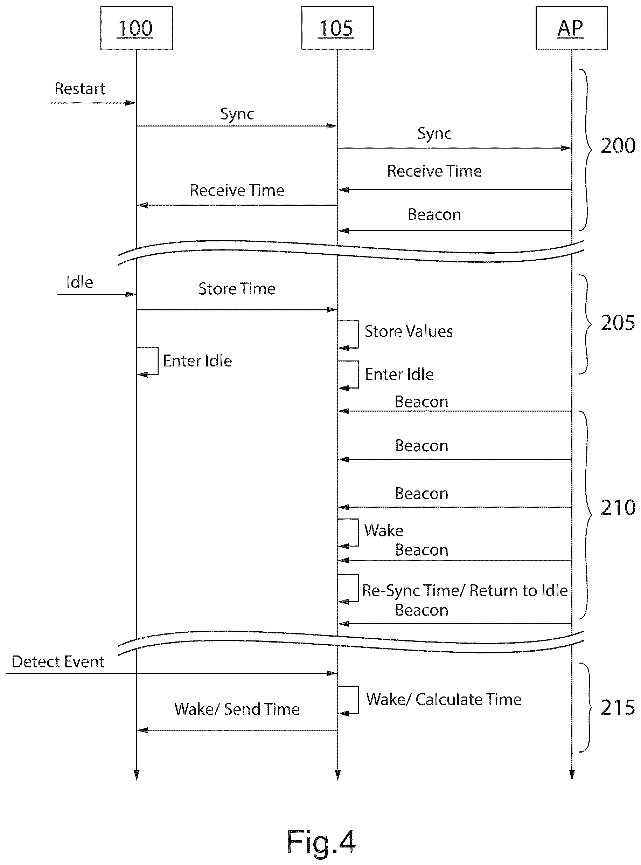

In operation, the electronic monitoring system disclosed herein provides an improved system and method for maintaining a free-running clock for monitoring devices, such as the camera 20, as they enter and exit idle operating modes. Turning next to Fig. 4, a timing diagram for maintaining time registers 113, 123 within the camera 20 is illustrated. The timing diagram is arranged in four segments. A first segment 200 illustrates steps taken to initialize time registers 113, 123 when a camera 20 powers up. A second segment 205 illustrates steps taken to record timing values prior to entering an idle operating state. A third segment 210 illustrates step performed by the second control architecture 105 while the first control architecture 100 is in the idle operating state. A fourth segment 215 illustrates steps performed to provide an updated time to the first control architecture 100 upon waking from the idle operating state.

In the first segment 200, a hard restart occurs. This hard restart may occur upon an initial power up of the camera 20 or as a result of a forced reset of the camera 20. The hard restart is intended to cause the camera 20 to reset its operating state and may include steps such as reassociating the camera 20 with the base station 30, resetting time registers 113, 123, or still other steps typically performed one time to establish desired operation of the camera 20. As illustrated, both the first control architecture 100 and the second control architecture 105 seek to synchronize their respective time registers 113, 123 with a high precision time source. In the illustrated embodiment, the high precision time source is an access point (AP) within the electronic monitoring system 10. The AP may be the base station 30, a router, a gateway, or other network device within the WLAN 55 with which the camera 20 is in communication and which maintains a high precision time register. The first control architecture 100 is in communication with the second control architecture 105, and the second control architecture 105 is in direct communication with the AP. Thus, the first control architecture 100 can request synchronization of the first time register 113 via the second control architecture 105, and the second control architecture 105 can request a present time value from the AP. The second control architecture 105 receives the present time from the AP. The second control architecture 105 updates the second time register 123 with the present time and passes the present time to the first control architecture 100. The first control architecture 100, in turn, sets the first time register 113 to the present time. Both the first time register 113 and the second time register 123 are, therefore, initially synchronized to a high precision time source.

As also indicated within the first segment 200 of operation shown in Fig. 4, the AP may begin sending beacon frames to the second control architecture 105 once the camera is registered with the AP and initial configuration is complete. In addition to the TIM or DTM, discussed above, which indicates the AP has data to transmit to the first control architecture 100, the beacon frame may also include time information to be used by the second control architecture. Within each beacon frame, a current value of time from the high precision time source may be included. It is contemplated that the second control architecture 105 may continually update the second time register 123 while operating in an active state. Optionally, the second control architecture 105 may utilize every second, every third, or any other periodic interval of beacon frames, as desired, to update the second time register 123 while operating in active state. Similarly, the second control architecture 105 may pass the high precision time value to the first control architecture 100 upon receipt of each beacon frame or at periodic multiples of the beacon frame while the first and second control architectures are in an active operating state. Thus, while the control architectures are in an active state, the first and second time registers 113, 123 may be kept at a higher precision value than may be obtained by utilizing the free-running value generated by the clock circuit 77 within the camera 20.

Moving next to the second segment 205 of operation illustrated in Fig. 4, the camera 20 may be commanded to enter an idle state. The idle operating state is the state in which the camera 20 spends a majority of time in order to preserve battery life for the camera 20. The enter idle state command may be generated by a timer executing in the first control architecture 100. The timer starts when no activity is required within the camera 20, and after a predefined time period with no required activity, the timer expires and commands the first control architecture 100 to enter the idle state. Prior to entering the idle state, the first control architecture 100 transmits the value in first time register 113 to the second control architecture 105 for storage. The second control architecture 105 stores the value from the first time register 113 in memory 125 as an original time value for the first control architecture 100. In addition, the second control architecture 105 also stores the present value from the second time register 123 in memory 125 as a base time value. These stored time values are used later when the camera 20 wakes from the idle operating state. Having transferred the present value of the first time register 113 to the second control architecture 105, the first control architecture 100 may then enter the idle state. Having stored the original time value and the base time value, the second control architecture 105 may also enter the idle state such that the camera 20 is now in an idle operating state.

While in the idle operating state, the clock circuit 77 for the camera 20 continues operation. The clock circuit 77 includes an oscillator that is used to continually update the present time value within the camera. The clock circuit 77 also updates the present time values in the first time register 113 and the second time register 123. As discussed above, the low precision oscillator will cause the present time values in the first time register 113 and the second time register 123 to drift away from the actual present time as maintained by the high precision time source. Therefore, the first and second time registers 113, 123 need to be periodically resynchronized with the clock circuit in the AP to maintain an accurate present time value in the camera 20.

Continuing down the timing diagram in Fig. 4 to the third segment 210 of operation, the AP will continue to transmit beacon frames to the camera 20. While in an idle state, the second control architecture 105 will ignore the beacon frames. As discussed above, the beacon frames contain both an indicator of whether a data message is available for the camera 20 and the present time information generated by a high precision clock time source. Because the two control architectures are independently controlled, the second control architecture 105 may be periodically awakened without waking the first control architecture 100. A timed interrupt may be utilized to wake the second control architecture 105 to read a beacon frame. According to the illustrated embodiment, the second control architecture 105 is awakened to read every fourth beacon frame. However, the periodic interval may be adjusted to read the beacon frame either more or less frequently. During each interval in which the second control architecture 105 is awakened, the incoming beacon frame is decoded. The second control architecture 105 will read the present time value from the AP and synchronizes the second time register 123 to the high precision time source. After synchronizing the second time register 123, the second control architecture returns to the idle state In this manner, the second time register 123 will be periodically re-synchronized while the first control architecture 100 remains in an idle state.

Turning to the final segment 215 of operation illustrated in Fig. 4, the camera 20 detects an event for which the first control architecture 100 needs to be awakened. The event may be an audio sound detected by a microphone, motion detected by a motion sensor, or other such signal generated by a secondary sensor 145 in the camera 20. The secondary sensor 145 generates a feedback signal which is provided as an interrupt to the second control architecture 105, indicating that the first control architecture 100 is needed to begin recording video in the camera 20. It is desirable to wake the first control architecture 100 and begin recording video as soon as possible after the triggering event is detected. Typically, it is also desirable to include a timestamp on the video recorded to provide an indication of when the event occurred. However, the time register 113 in the first control architecture 100 has been reliant solely upon the clock circuit 77 in the camera 20 for maintaining a present time value since the first control architecture 100 entered the idle mode. Any drift in time as a result of the low precision oscillator in the clock circuit 77 will result in an inaccurate timestamp on the video recorded.

To eliminate the delay inherent in requesting a new time value from the AP by the first control architecture 100 and resynchronizing the first time register 113 with the high precision time source used by the AP prior to recording video, the time value in the second time register 123 is provided by the second control architecture 105 to the first control architecture 100 with a command to wake from the idle state. According to one aspect of the invention, the second control architecture 105 may first determine a new time value for the first time register 113 and provide the new time value to the first control architecture 100 with the wake command. The new time value may be determined as a function of the previously stored original time value for the first control architecture 100 and base time value for the second control architecture 105 as shown in Eq. 1 below. ${t}_{new} = {t}_{original} + \left({t}_{present}-{t}_{base}\right)$ where:
t_{new} is the new time value to be calculated,
t_{original} is the time value from the first control architecture 100 stored before entering the idle state,
tₚᵣₑₛₑₙt is the present time value in the second control architecture 105, and
t_{base} is the time value from the second control architecture 105 stored before entering the idle state.

As discussed above, the original time value for the first control architecture 100 and base time value for the second control architecture 105 were both stored at the time the first control architecture 100 in the camera 20 entered the idle state. While the first control architecture 100 was in the idle state, the time register 123 for the second control architecture was periodically resynchronized with the high precision time source. The difference, therefore, between the present time in the time register 123 for the second control architecture and the base time stored as the first control architecture 100 entered the idle state provides an accurate value of the duration for which the first control architecture 100 was in the idle state. Adding this difference to the original time value from the first control architecture 100 stored as the first control architecture 100 entered the idle state provides an accurate value for the new time value to be loaded into the time register 113 for the first control architecture 100.

According to one aspect of the invention, the second control architecture 105 executes Equation 1 when it receives the trigger signal that an event has occurred. The second control architecture 105 may then send the new time value along with the wake command for the first control architecture 100. As the first control architecture 100 wakes from the idle state, it updates the time register 113 with the new time value and may promptly begin recording video with an accurate time stamp.

According to another aspect of the invention, the second control architecture 105 transmits the present value of the time register 123 in the second control architecture 105 along with the original time and base time previously stored with the wake command for the first control architecture 100. As the first control architecture 100 wakes from the ide state, the first control architecture 100 may execute Equation 1 and update the time register 113 with the new time value. The first control architecture 100 may promptly begin recording video with an accurate time stamp.

According to still another aspect of the present invention, it is contemplated that the timestamp function may be entirely executed by the second control architecture 105. Because the second control architecture periodically resynchronizes its time register 123 while the first control architecture 100 is in the idle state, the present time in the second time register 123 remains more closely synchronized to the high precision time source. Rather than requiring the second control architecture 105 to resynchronize a first time register 113, the second control architecture 105 may append a time stamp to video generated by the first control architecture 100 as the video stream is transmitted via the second control architecture 105 to the access point.

Although the best mode contemplated by the inventors of carrying out the present invention is disclosed above, practice of the above invention is not limited thereto. It will be manifest that various additions, modifications and rearrangements of the features of the present invention may be made without deviating from the spirit and the scope of the underlying inventive concept.

It should be appreciated that such a development effort might be complex and time consuming, but would nevertheless be a routine undertaking of design, fabrication, and manufacture for those of ordinary skill having the benefit of this disclosure. Nothing in this application is considered critical or essential to the present invention unless explicitly indicated as being "critical" or "essential."

### ASPECTS

1. A method for providing a time stamp in an electronic monitoring system, the method comprising:
   detecting an event occurring at a monitoring device, wherein:
      the monitoring device includes a first control architecture and a second control architecture, and
      the second control architecture receives a signal indicating that the event occurred;
   waking the first control architecture from an idle state with the second control architecture upon receiving the signal indicating the event occurred;
   transmitting a present time from the second control architecture to the first control architecture; and
   determining a present time for the first control architecture as a function of a stored time in a memory for the first control architecture and of the present time in the second control architecture.
2. The method of aspect 1, further comprising waking the second control architecture from an idle state upon receipt of the signal indicating the event occurred.
3. The method of aspect 1, further comprising:
   synchronizing a first time register for the first control architecture with an external time source; and
   synchronizing a second time register for the second control architecture with the external time source.
4. The method of aspect 3, further comprising the steps of:
   receiving an enter idle state command for the first control architecture to transition from an active state to the idle state;
   storing a present value of the first time register as an original time value after receiving the enter idle state command and prior to the first control architecture entering the idle state; and
   storing a present value of the second time register as a base time value after receiving the enter idle state command and prior to the first control architecture entering the idle state.
5. The method of aspect 4, wherein determining the present time in the first control architecture further comprises:
   reading the original time value and the base time value which were previously stored prior to the first control architecture entering the idle state;
   reading a present value of the second time register; and
   setting the first time register equal to the original time value added to a difference between the present value of the second time register and the base time value.
6. The method of aspect 5, wherein:
   the second control architecture reads the original time value and the base time value,
   the second control architecture reads the present value of the second time register,
   the second control architecture determines a new time value equal to the original time value added to a difference between the present value of the second time register and the base time value, and
   further comprising transmitting the new time value from the second control architecture to the first control architecture.
7. The method of aspect 5, wherein:
   the second control architecture reads the original time value and the base time value, and
   the second control architecture reads the present value of the second time register; and
   further comprising transmitting the original time value, the base time value, and the present value from the second time register to the first control architecture, and wherein
   the first control architecture determines a new time value equal to the original time value added to a difference between the present value of the second time register and the base time value.
8. The method of aspect 1, further comprising:
   receiving a beacon message from an access point in the electronic monitoring system; and
   synchronizing a time register for the second control architecture with an external time source on the access point.
9. The method of aspect 8, further comprising:
   placing the second control architecture in an idle state;
   ignoring at least one beacon message while the second control architecture is in the idle state; and
   waking the second control architecture at a predefined duration to receive the beacon message for synchronizing the time register.
10. A system for providing a time stamp in an electronic monitoring system, comprising:
   an access point having a first clock circuit; and
   at least one monitoring device in communication with the access point, the at least one monitoring device comprising:
      a camera that is configured to obtain images of a monitored area;
      at least one sensor that is operative to generate a trigger signal corresponding to an event detected by the at least one sensor;
      a second clock circuit;
      a first control architecture, wherein the first control architecture is configured to:
         control the camera to obtain the images of the monitored area, and
         enter an idle state; and
      a second control architecture connected to the at least one sensor to receive the trigger signal, wherein the second control architecture is operative to:
         wake the first control architecture from the idle state responsive to receiving the trigger signal, and
         transmit a present time to the first control architecture, wherein the first and second control architectures determine a present time for the first control architecture as a function of a stored time for the first control architecture, a stored time for the second control architecture, and of the present time in the second control architecture.
11. The system of aspect 10, further comprising a base station that is configured to control the electronic monitoring system.
12. The system of aspect 11, wherein the base station includes the access point.
13. The system of aspect 11, further comprising a router that is configured to establish wireless communication between the at least one monitoring device and the base station, and wherein the router includes the access point.
14. The system of aspect 10, wherein:
   the first control architecture includes a first memory with a first time register;
   the first control architecture is configured to synchronize the first time register with an external time source;
   the second control architecture includes a second memory with a second time register; and
   the second control architecture is configured to synchronize the second time register with the external time source.
15. The system of aspect 14, wherein:
   the first control architecture is further configured to receive an enter idle state command for the first control architecture to transition from an active state to the idle state;
   the first control architecture is further configured to store a present value of the first time register as an original time value after receiving the enter idle state command and prior to the first control architecture entering the idle state; and
   the second control architecture is further configured to store a present value of the second time register as a base time value after receiving the enter idle state command at the first control architecture and prior to the first control architecture entering the idle state.
16. The system of aspect 15, wherein the second control architecture is further configured to transmit a new time for the first control architecture to the first control architecture when the second control architecture wakes the first control architecture from the idle state.
17. The system of aspect 16, wherein:
   the original time value and the base time value are stored in the second memory; and
   the second control architecture is further configured to:
      read the original time value and the base time value which were previously stored prior to the first control architecture entering the idle state;
      read a present value of the second time register; and
      determine the new time for the first control architecture equal to the original time value added to a difference between the present value of the second time register and the base time value.
18. The system of aspect 15, wherein:
   the second control architecture is further operative to transmit a present value of the second time register to the first control architecture when the second control architecture wakes the first control architecture from the idle state; and
   the first control architecture is further configured to determine a new time for the first control architecture equal to the original time value added to a difference between the present value of the second time register and the base time value.
19. The system of aspect 14, wherein the second control architecture is further configured to:
   receive a beacon message from an access point in the electronic monitoring system; and
   synchronize the second time register with the external time source responsive to receiving the beacon message.
20. The system of aspect 19, wherein the second control architecture is further configured to:
   place the second control architecture in an idle state;
   ignore at least one beacon message while the second control architecture is in the idle state; and
   wake the second control architecture at a predefined duration to receive the beacon message for synchronizing the time register.

## Claims

1. A method for providing a time stamp in an electronic monitoring system, the method comprising:
detecting an event occurring at a monitoring device, wherein:
the monitoring device includes a first control architecture and a second control architecture, and
the second control architecture receives a signal indicating that the event occurred;
waking the first control architecture from an idle state with the second control architecture upon receiving the signal indicating the event occurred;
transmitting a present time from the second control architecture to the first control architecture; and
determining a present time for the first control architecture as a function of a stored time in a memory for the first control architecture and of the present time in the second control architecture.

2. The method of claim 1, further comprising waking the second control architecture from an idle state upon receipt of the signal indicating the event occurred.

3. The method of claim 1 or claim 2, further comprising:
synchronizing a first time register for the first control architecture with an external time source; and
synchronizing a second time register for the second control architecture with the external time source.

4. The method of claim 3, further comprising:
receiving an enter idle state command for the first control architecture to transition from an active state to the idle state;
storing a present value of the first time register as an original time value after receiving the enter idle state command and prior to the first control architecture entering the idle state; and
storing a present value of the second time register as a base time value after receiving the enter idle state command and prior to the first control architecture entering the idle state.

5. The method of claim 4, wherein determining the present time in the first control architecture further comprises:
reading the original time value and the base time value which were previously stored prior to the first control architecture entering the idle state;
reading a present value of the second time register; and
setting the first time register equal to the original time value added to a difference between the present value of the second time register and the base time value.

6. The method of claim 5, wherein:
the second control architecture reads the original time value and the base time value,
the second control architecture reads the present value of the second time register,
the second control architecture determines a new time value equal to the original time value added to a difference between the present value of the second time register and the base time value, and
further comprising transmitting the new time value from the second control architecture to the first control architecture.

7. The method of claim 5, wherein:
the second control architecture reads the original time value and the base time value, and
the second control architecture reads the present value of the second time register; and
further comprising transmitting the original time value, the base time value, and the present value from the second time register to the first control architecture, and wherein
the first control architecture determines a new time value equal to the original time value added to a difference between the present value of the second time register and the base time value.

8. The method of any of the preceding claims, further comprising:
receiving a beacon message from an access point in the electronic monitoring system; and
synchronizing a time register for the second control architecture with an external time source on the access point.

9. The method of claim 8, further comprising:
placing the second control architecture in an idle state;
ignoring at least one beacon message while the second control architecture is in the idle state; and
waking the second control architecture at a predefined duration to receive the beacon message for synchronizing the time register.

10. A system for providing a time stamp in an electronic monitoring system, comprising:
an access point having a first clock circuit; and
at least one monitoring device in communication with the access point, the at least one monitoring device comprising:
a camera that is configured to obtain images of a monitored area;
at least one sensor that is operative to generate a trigger signal corresponding to an event detected by the at least one sensor;
a second clock circuit;
a first control architecture, wherein the first control architecture is configured to:
control the camera to obtain the images of the monitored area, and
enter an idle state; and
a second control architecture connected to the at least one sensor to receive the trigger signal, wherein the second control architecture is operative to:
wake the first control architecture from the idle state responsive to receiving the trigger signal, and
transmit a present time to the first control architecture, wherein the first and second control architectures determine a present time for the first control architecture as a function of a stored time for the first control architecture, a stored time for the second control architecture, and of the present time in the second control architecture.

11. The system of claim 10, wherein:
the first control architecture includes a first memory with a first time register;
the first control architecture is configured to synchronize the first time register with an external time source;
the second control architecture includes a second memory with a second time register; and
the second control architecture is configured to synchronize the second time register with the external time source.

12. The system of claim 11, wherein:
the first control architecture is further configured to receive an enter idle state command for the first control architecture to transition from an active state to the idle state;
the first control architecture is further configured to store a present value of the first time register as an original time value after receiving the enter idle state command and prior to the first control architecture entering the idle state; and
the second control architecture is further configured to store a present value of the second time register as a base time value after receiving the enter idle state command at the first control architecture and prior to the first control architecture entering the idle state.

13. The system of claim 12, wherein the second control architecture is further configured to transmit a new time for the first control architecture to the first control architecture when the second control architecture wakes the first control architecture from the idle state.

14. The system of claim 13, wherein:
the original time value and the base time value are stored in the second memory; and
the second control architecture is further configured to:
read the original time value and the base time value which were previously stored prior to the first control architecture entering the idle state;
read a present value of the second time register; and
determine the new time for the first control architecture equal to the original time value added to a difference between the present value of the second time register and the base time value.

15. The system of claim 10, wherein the second control architecture is further configured to:
receive a beacon message from an access point in the electronic monitoring system; and
synchronize the second time register with the external time source responsive to receiving the beacon message
place the second control architecture in an idle state;
ignore at least one beacon message while the second control architecture is in the idle state; and
wake the second control architecture at a predefined duration to receive the beacon message for synchronizing the time register.
